# FASCICULE DE BREVET EUROPEEN

(11) **EP 0 575 217 B1**
(45) Date de publication et mention de la délivrance du brevet: **14.08.1996**
(21) Numéro de dépôt: 93401427.5
(22) Date de dépôt: 03.06.1993
(51) Int. Cl.: G01N 3/48

(54) **Dispositif de contrôle de la jante d'une roue de chemin de fer**
Einrichtung zur Überprüfung der Felge eines Eisenbahnrades
Device for testing the rim of a railway wheel

(30) Priorité: 18.06.1992 FR 9207433
(43) Date de publication de la demande: 22.12.1993
(73) Titulaire: VALDUNES, F-92800 Puteaux (FR)
(72) Inventeur: Catot, Bernard, F-59495 Leffrinckoucke (FR); Del Fabro, Valério, F-59770 Marly (FR); Stevenot, Guy, F-59240 Dunkerque (FR)
(74) Mandataire: Bouget, Lucien

(56) Documents cités:
- US-A- 4 164 141
- US-A- 4 679 358
- US-A- 4 719 793

## Description

La présente invention est relative au contrôle par ultrasons des contraintes résiduelles dans la jante d'une roue de chemin de fer et au contrôle par billage de la dureté de la jante.

Les roues de chemin de fer obtenues par forgeage et traitement thermique doivent être contrôlées. On doit notamment contrôler la dureté et les contraintes résiduelles des jantes. Pour celà on effectue des opérations manuelles de préparation de surface et de contrôle qui sont longues.

On connaît par les US-A-4.164.141 et US-A-4.719.793, un dispositif de contrôle d'une roue de chemin de fer comportant un châssis, un rail de support de la roue, un dispositif de meulage, un moyen de déplacement du dispositif de meulage, un dispositif de mesure de dureté par billage et d'un dispositif d'application d'une force prédéterminée sur le dispositif de mesure de dureté par billage.

On connaît également par le US-A-4.679.358, un dispositif de meulage automatique d'une roue de chemin de fer.

Cependant, les dispositifs selon l'art antérieur ne permettent pas de réaliser le contrôle des contraintes résiduelles dans la jante d'une roue de chemin de fer, de manière automatique.

Le but de la présente invention est de faciliter ces contrôles en proposant un moyen automatique pour le contrôle d'une roue de chemin de fer par ultrasons.

A cet effet, l'invention a pour objet un dispositif de contrôle de la jante d'une roue de chemin de fer, comprenant :
- un châssis comportant une partie horizontale en forme de quadrilatère et au moins une partie verticale disposée parallèlement à l'axe des bords de la partie horizontale,
- un rail de support de la roue fixé sur la partie horizontale du châssis dans une direction parallèle à la direction de la partie verticale du châssis,
- des longerons de guidage de la roue fixés sur la partie verticale du châssis dans une direction parallèle à la direction du rail,
- un longeron parallèle aux longerons de guidage de la roue, monté mobile perpendiculairement aux longerons de guidage et parallèlement à la partie horizontale du châssis,
- des moyens de déplacement du longeron mobile destinés à l'appliquer contre la roue,
- des glissières fixées sur la partie horizontale du châssis dans une direction parallèle au rail,
- un chariot monté mobile en translation sur les glissières,
- un moyen de déplacement du chariot,
- un dispositif de meulage porté par le chariot et monté mobile sur le chariot dans une direction perpendiculaire aux glissières,
- un moyen de déplacement du dispositif de meulage,
et caractérisé en ce qu'il comporte en outre :
- un dispositif de contrôle par ultrasons monté mobile en translation sur le chariot dans une direction perpendiculaire aux glissières,
- un moyen de déplacement du dispositif de contrôle par ultrasons entre une position de service en contact avec la jante de la roue et une position de retrait,
- un détecteur de position de type mécanique monté mobile sur le chariot dans une direction perpendiculaire aux glissières et des moyens de déplacement du détecteur entre une position effacée et une position en appui contre la jante de la roue .

Le dispositif de mesure de dureté par billage comporte une tête de billage montée coulissante dans un fourreau, ladite tête comportant à son extrémité une calotte, et un capteur linéaire de déplacement de la tête de billage.

Le dispositif d'application d'une force prédéterminée contre le dispositif de mesure de dureté par billage peut comporter un levier articulé sur le châssis, un vérin à vis muni d'un moteur, porté par le levier et pouvant s'appliquer contre la calotte du dispositif de mesure de dureté par billage, un contrepoids pouvant s'appuyer sur le bras du levier, un vérin de relevage du contrepoids, un vérin de libération du contrepoids, un support pour les vérins de relevage et de libération du contrepoids.

De préférence, le dispositif comporte en outre un dispositif de contrôle par ultrasons monté mobile en translation sur le chariot dans une direction perpendiculaire aux glissières, un moyen de déplacement du dispositif de contrôle par ultrasons entre une position de service en contact avec la jante de la roue et une position de retrait, un détecteur de position de type mécanique monté mobile sur le chariot dans une direction perpendiculaire aux glissières et des moyens de déplacement du détecteur entre une position effacée et une position en appui contre la jante de la roue.

Le dispositif de contrôle par ultrasons comporte une tête émettrice réceptrice d'ondes ultrasonores de cisaillement montée rotative autour d'un axe horizontal parallèle à l'axe de déplacement du dispositif de contrôle par ultrasons, un moyen de mise en rotation de la tête émettrice et réceptrice et un moyen de distribution du fluide de couplage.

De préférence, les moyens de déplacement en translation du chariot, du dispositif de meulage, du dispositif de contrôle par ultrasons et du détecteur de position mécanique sont des vérins pneumatiques.

Le dispositif selon l'invention comporte des moyens électropneumatiques et électroniques de commande.

Enfin, le rail comporte à sa partie supérieure une entaille en V d'arrêt de la roue en position de mesure et de contrôle.

L'invention qui permet de réaliser des contrôles automatiques des roues de chemin de fer va maintenant être décrite en regard des figures annexées dans lesquelles :

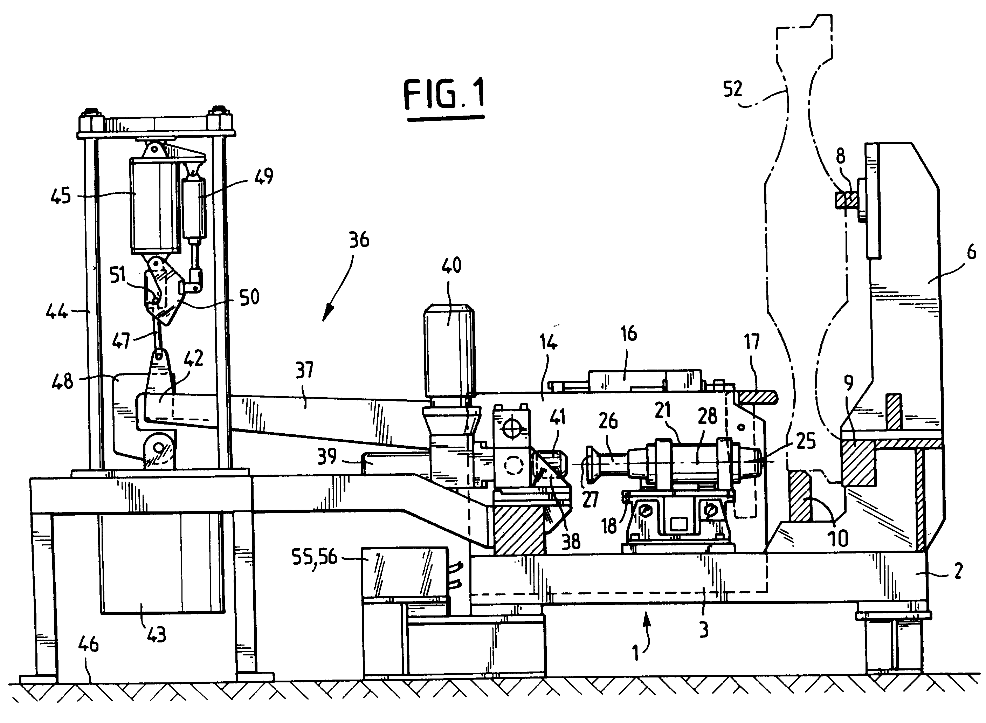

- la figure 1 est une vue en élévation du dispositif selon l'invention dont le châssis a été coupé par un plan vertical,

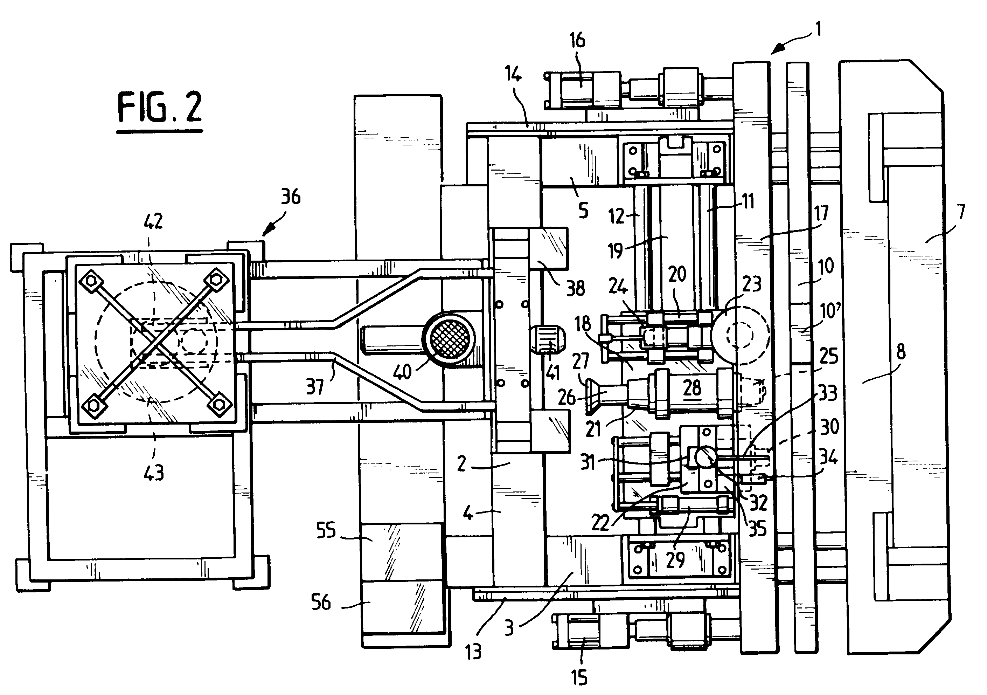

- la figure 2 est une vue de dessus.

Le dispositif comporte un châssis repéré dans son ensemble par 1, constitué d'un cadre horizontal 2 formé de poutres 3, 4, 5 et de montants verticaux 6, 7 situés vers une des extrémités des poutres 3 et 5 de telle sorte que, vu en élévation et de profil, le châssis ait une forme de L.

Les montants 6 et 7 portent des longerons horizontaux 8, 9. Le cadre horizontal porte un rail 10. Le rail 10 est muni d'une encoche 10' en V à sa partie supérieure à peu près dans l'axe du dispositif.

Le cadre horizontal porte également des flasques verticaux 13, 14 perpendiculaires au rail 10 sur lesquels sont fixés des vérins 15, 16 dont les tiges portent un longeron mobile 17 parallèle au rail 10 et aux longerons fixes 8, 9. Les vérins permettent de déplacer le longeron mobile 17 parallèlement à lui-même pour le rapprocher du plan défini par les longerons fixes 8 et 9.

Des glissières 11, 12 fixées sur la partie horizontale du châssis 1 dans une direction parallèle au rail 10 portent un chariot mobile 18 déplaçable en translation à l'aide d'un vérin pneumatique 19.

Sur le chariot 18 sont montés côte à côte et à la suite l'un de l'autre dans la direction transversale :
- un dispositif de meulage 20,
- un dispositif de mesure de dureté par billage 21,
- un dispositif de contrôle par ultrasons des contraintes résiduelles 22.

Le dispositif de meulage 20 comporte une meule rotative 23 montée mobile sur le chariot 18 perpendiculairement aux glissières 11, 12. La meule 23 peut être déplacée à l'aide du vérin pneumatique 24.

Le dispositif de mesure de dureté par billage 21 comporte une tête de billage 25 montée sur une tige 26 portant à son extrémité une calotte 27 et pouvant coulisser dans un fourreau 28.

Ce dispositif comporte en outre un moyen de mesure du déplacement de la tête de billage, non représenté.

Le dispositif de contrôle par ultrasons des contraintes résiduelles 22 est monté mobile perpendiculairement aux glissières 11, 12 et peut être déplacé à l'aide d'un vérin pneumatique 29. Il comporte une tête émettrice réceptrice d'ondes ultrasonores de cisaillement 30 montée rotative autour d'un axe horizontal parallèle à l'axe de déplacement du dispositif de contrôle par ultrasons et un vérin 31 de déplacement en rotation de la tête émettrice réceptrice 30.

Le dispositif de contrôle par ultrasons 22 comporte également un moyen d'alimentation en fluide de couplage constitué d'une pompe doseuse 32 et d'un tube 33 qui débouche à proximité de la tête émettrice-réceptrice.

Un détecteur de position 34 de type mécanique est monté sur le support 35 du dispositif 22 de contrôle par ultrasons, si bien qu'il peut être déplacé perpendiculairement aux glissières 11, 12 à l'aide du vérin 29.

Un dispositif 36 permet d'appliquer une force prédéterminée sur la tête de billage 25 par l'intermédiaire de la tige 26 et de la calotte 27.

Ce dispositif 26 comporte un levier 37 articulé à une de ses extrémités 38 sur la traverse 4 du châssis 1, portant à sa partie située à proximité de l'extrémité 38 un vérin à vis 39 muni d'un moteur 40, dont la tête 41 peut venir coopérer avec la calotte 27, et à son extrémité 42 éloignée de l'articulation, un contre-poids 43.

Un support 44 posé sur le sol 46 porte un premier vérin 45 dont la tige est reliée à un crochet 48 auquel est suspendu le contre-poids 43.

Le support 44 porte un deuxième vérin 49 pouvant actionner un crochet 50 accroché au corps du vérin 45 et pouvant s'enclencher sur un axe 51 fixé à l'extrémité de la tige du vérin 45.

L'ensemble 36 est disposé de façon telle que l'axe du vérin à vis 39 soit approximativement en regard de l'entaille en V 10' du rail 10.

Pour effectuer un contrôle d'une roue 52 on procède de la façon qui suit :

On amène la roue sur le rail 10 et on la maintient en position dans l'entaille en V 10', à l'aide des vérins 15 et 16 en appliquant la traverse 17 contre la roue de façon à serrer la roue entre les traverses 8, 9 d'une part et la traverse 17 d'autre part.

A l'aide du vérin 19 on amène la meule 23 en regard de la jante de la roue, au droit de l'entaille en V puis avec le vérin 24, on applique la meule contre la jante et on meule localement la jante en faisant subir un mouvement de va et vient à la meule 23 à l'aide du vérin 19, puis on recule la meule.

A l'aide du vérin 19 on amène le palpeur 34 en face de la zone meulée puis avec le vérin 29, on applique le palpeur 34 contre la jante de la roue, on enregistre la position du palpeur, ce qui permet de mesurer l'épaisseur de la jante, puis on recule le palpeur 34.

A l'aide du vérin 19, on amène la tête 30 émettrice-réceptrice d'ultrasons en regard de la zone meulée et on applique la tête 30 contre la jante de la roue 52 à l'aide du vérin 29 ; avec la pompe doseuse 32 on envoie du liquide de couplage et on fait une première mesure de temps de propagation des ondes ultrasonores dans la jante; puis on fait subir à la tête 30 émettrice-réceptrice une rotation d'un quart de tour à l'aide du vérin 31 et on fait une deuxième mesure de temps de propagation des ondes ultrasonores, puis, à l'aide du vérin 29, on recule la tête émettrice-réceptrice.

La mesure d'épaisseur de la jante et les mesures de temps de propagation d'ondes ultrasonores dans la jante permettent de déterminer les contraintes résiduelles dans la jante.

Une fois la mesure de contraintes résiduelles terminée, à l'aide du vérin 19 on amène la tête de mesure de dureté par billage 25 en face de la zone meulée ; la tête 41 du vérin à vis 39, la calotte 27, la tige 26, la tête de billage 25 et la zone meulée de la jante sont alors alignées ; à l'aide du moteur 40 on applique la tête 41 du vérin à vis 39 contre la calotte 27 de façon à appliquer la tête de billage 25 contre la jante de la roue avec une force de l'ordre de 200 kg ; puis avec le vérin 49 on rétracte le crochet 50, ce qui libère le contre-poids 43 qui, appuyant sur le levier 37, vient appliquer la tête 41 contre la calotte 27, ce qui applique la tête de billage 25 contre la jante de la roue avec une force de 3000 kg ; à l'aide du capteur de déplacement on mesure le déplacement dans la direction axiale de la tête de billage 25 entre sa position lorsqu'elle est appliquée contre la jante avec une force de 200 kg et sa position lorsqu'elle est appliquée contre la jante avec une force de 3000 kg ; ce déplacement permet de calculer la dureté de la jante à partir de la mesure d'enfoncement de la bille.

Après la mesure de dureté, le contre-poids 43 est remonté à l'aide du vérin 45, ce qui enclenche l'axe 51 sur le crochet 50, ainsi le contre-poids est maintenu en position haute.

L'ensemble des vérins et des moyens de mesure sont reliés à des dispositifs de commande électropneumatiques 55 et à des moyens de commande électroniques 56 qui permettent d'effectuer tous les mouvements automatiquement.

On comprendra que le dispositif qui vient d'être décrit peut être réalisé par des moyens équivalents en particulier pour le guidage et pour le mouvement des différents éléments mobiles.

## Revendications

1. Dispositif de contrôle de la jante d'une roue de chemin de fer (52), comprenant :
- un châssis (1) comportant une partie horizontale en forme de quadrilatère et au moins une partie verticale (6, 7) disposée parallèlement à l'un des bords de la partie horizontale,
- un rail de support (10) de la roue (52) fixé sur la partie horizontale du châssis (1) dans une direction parallèle à la direction de la partie verticale (6, 7) du châssis (1),
- des longerons (8, 9) de guidage de la roue (52) fixés sur la partie verticale (6, 7) du châssis (1) dans une direction parallèle à la direction du rail (10),
- un longeron (17) parallèle aux longerons de guidage (8, 9) de la roue, monté mobile perpendiculairement aux longerons de guidage (8, 9) et parallèlement à la partie horizontale du châssis (1),
- des moyens (15, 16) de déplacement du longeron mobile (17) destinés à l'appliquer contre la roue (52),
- des glissières (11, 12) fixées sur la partie horizontale du châssis (1) dans une direction parallèle au rail (10),
- un chariot (18) monté mobile en translation sur les glissières (11, 12),
- un moyen de déplacement (19) du chariot (18),
- un dispositif de meulage (23) porté par le chariot (18) et monté mobile sur le chariot (18) dans une direction perpendiculaire aux glissières (11, 12),
- un moyen de déplacement (24) du dispositif de meulage (23),
caractérisé en ce qu'il comprend en outre :
- un dispositif (22) de contrôle par ultrasons monté mobile en translation sur le chariot (18) dans une direction perpendiculaire aux glissières (11, 12),
- un moyen de déplacement (29) du dispositif de contrôle par ultrasons (22) entre une position de service en contact avec la jante de la roue (52) et une position de retrait,
- un détecteur de position (34) de type mécanique monté mobile sur le chariot (18) dans une direction perpendiculaire aux glissières (11, 12) et des moyens de déplacement (29) du détecteur (34) entre une position effacée et une position en appui contre la jante de la roue (52).

2. Dispositif selon la revendication 1, caractérisé en ce que le dispositif de contrôle par ultrasons (22) comporte une tête émettrice-réceptrice (30) d'ondes ultrasonores de cisaillement montée rotative autour d'un axe horizontal parallèle à l'axe de déplacement du dispositif de contrôle par ultrasons (22), un moyen de déplacement en rotation (31) de la tête émettrice-réceptrice (30) et un moyen (32) de distribution du fluide de couplage.

3. Dispositif selon la revendication 1 ou 2, caractérisé en ce qu'il comporte en outre :
- un dispositif (21) de mesure de dureté par billage porté par le chariot (18),
- un dispositif (37, 43) d'application d'une force prédéterminée contre le dispositif (21) de mesure de dureté par billage.

4. Dispositif selon la revendication 3, caractérisé en ce que le dispositif (21) de mesure de dureté par billage comporte une tête de billage (25) montée à une extrémité d'une tige (26) coulissante dans un fourreau (28), ladite tige (26) comportant à une extrémité opposée à la tête de billage (25) une calotte et un capteur linéaire de déplacement de la tête de billage (25).

5. Dispositif selon la revendication 4, caractérisé en ce que le dispositif d'application d'une force prédéterminée contre le dispositif (21) de mesure de dureté par billage comporte :
- un levier (37) articulé sur le châssis (1),
- un vérin à vis (39) muni d'un moteur (40) porté par le levier (37) et comportant une partie d'appui (41) sur la calotte (37) du dispositif (21) de mesure de dureté par billage,
- un contre-poids (43) comportant une partie d'appui (48) sur le levier (37),
- un vérin (45) de relevage du contre-poids (43),
- un vérin (49) de libération du contre-poids (43),
- un support fixe (44) des vérins (45, 49) de relevage et de libération et du contre-poids (43).

6. Dispositif selon l'une quelconque des revendications 1 à 5, caractérisé en ce que les moyens (19, 24, 29) de déplacement en translation du chariot (18) du dispositif de meulage (23), du dispositif de contrôle par ultrasons (22) et du détecteur de position mécanique (34) sont des vérins pneumatiques.

7. Dispositif selon l'une quelconque des revendications précédentes, caractérisé en ce qu'il comporte des moyens électropneumatiques (55) et électroniques (56) de commande.

8. Dispositif selon l'une quelconque des revendications 1 à 8, caractérisé en ce que le rail (10) comporte à sa partie supérieure une entaille (10') en V d'arrêt de la roue (52) en position de mesure et de contrôle.

## Patentansprüche

1. Vorrichtung zum Überprüfen der Felge eines Eisenbahnrades (52), mit:
- einem Gerüst (1), das ein horizontales Teil viereckiger Form und wenigstens ein vertikales Teil (6,7), welches parallel zu einer der Kanten des horizontalen Teils angeordnet ist, aufweist,
- einer Tragschiene (10) für das Rad (52), die an dem horizontalen Teil des Gerüstes (1) in einer Richtung parallel zu der Richtung des vertikalen Teils (6, 7) des Gerüstes (1) befestigt ist,
- Längsträgern (8, 9) zum Führen des Rades (52), die auf dem vertikalen Teil (6, 7) des Gerüstes (1) in einer Richtung parallel zu der Richtung der Schiene (10) befestigt sind,
- einem Längsträger (17) parallel zu den Führungs-Längsträgern (8, 9) des Rades, der bewegbar senkrecht zu den Führungs-Längsträgern (8, 9) und parallel zu dem horizontalen Teil des Gerüstes (1) angebracht ist,
- Einrichtungen (15, 16) zum Verlagern des bewegbaren Längsträgers (17), dazu bestimmt, diesen gegen das Rad (52) zu legen,
- Führungsschienen (11, 12), die an dem horizontalen Teil des Gerüstes (1) in einer Richtung parallel zu der Schiene (10) befestigt sind,
- einem Wagen (18), der verschiebebeweglich an den Führungsschienen (11, 12) befestigt ist,
- einer Verlagerungseinrichtung (19) für den Wagen (18),
- einer Schleifvorrichtung (23), die von dem Wagen (18) getragen wird und bewegbar auf dem Wagen (18) in einer Richtung senkrecht zu den Führungsschienen (11, 12) angebracht ist,
- einer Verlagerungseinrichtung (24) für die Schleifvorrichtung (23),
dadurch gekennzeichnet, daß sie weiterhin aufweist:
- eine Vorrichtung (22) zum Überprüfen durch Ultraschall, die verschiebebeweglich auf dem Wagen (18) in einer Richtung senkrecht zu den Führungsschienen (11, 12) angebracht ist,
- eine Verlagerungseinrichtung (29) für die Ultraschall-Prüfvorrichtung (22) zwischen einer Betriebsposition in Kontakt mit der Felge des Rades (52) und einer Rückzugsposition,
- einen Positionsdetektor (34) vom mechanischen Typ, der bewegbar in einer Richtung senkrecht zu den Führungsschienen (11, 12) auf dem Wagen (18) angebracht ist, und Verlagerungseinrichtungen (29) für den Detektor (34) zwischen einer zurückgenommenen Position und einer Position in Anlage an die Felge des Rades (52).

2. Vorrichtung nach Anspruch 1, dadurch gekennzeichnet, daß die Vorrichtung zum Überprüfen durch Ultraschall (22) einen Sender-Empfänger-Kopf (30) für Ultraschall-Transversalwellen, der drehbar um eine horizontale Achse parallel zu der Achse der Verlagerung der Vorrichtung zum Überprüfen durch Ultraschall (22) angeordnet ist, eine Drehverlagerungseinrichtung (31) für den Sender-Empfänger-Kopf (30) und eine Einrichtung (32) für die Verteilung von Kopplungsfluid aufweist.

3. Vorrichtung nach Anspruch 1 oder 2, dadurch gekennzeichnet, daß sie weiterhin umfaßt:
- eine Vorrichtung (21) zum Härtemessen durch Kugeleindrücken, von dem Wagen (18) getragen,
- eine Vorrichtung (37, 43) für das Aufbringen einer vorbestimmten Kraft gegen die Vorrichtung (21) zum Härtemessen durch Kugeleindrücken.

4. Vorrichtung nach Anspruch 3, dadurch gekennzeichnet, daß die Vorrichtung (21) zum Härtemessen durch Kugeleindrücken einen Kugeldrückkopf (25) aufweist, der an einem Ende einer Stange (26) angebracht ist, welche in einer Buchse (28) gleitet, wobei die Stange (26) an einem Ende gegenüber dem Kugelkopf (25) eine Kalotte und einen Linearaufnehmer für die Verlagerung des Kugeldrückkopfes (25) aufweist.

5. Vorrichtung nach Anspruch 4, dadurch gekennzeichnet, daß die Vorrichtung zum Aufgeben einer vorbestimmten Kraft gegen die Vorrichtung (21) zum Härtemessen durch Kugeleindrücken aufweist:
- einen Hebel (37), der an dem Gerüst (1) angelenkt ist,
- ein Schraubenstellglied (39), welches mit einem Motor (40) versehen ist, der von dem Hebel (37) getragen wird, und das einen Anlageabschnitt (41) an die Kalotte (27) der Vorrichtung (21) zur Härtemessung durch Kugeleindrücken aufweist,
- ein Gegengewicht (43), das einen Anlageabschnitt (48) auf dem Hebel (37) aufweist,
- ein Stellglied (45) zum Anheben des Gegengewichtes (43),
- ein Stellglied (49) zum Freigeben des Gegengewichtes (43),
- einen festen Träger (44) für die Stellglieder (45, 49) zum Anheben und Freigeben und für das Gegengewicht (43).

6. Vorrichtung nach einem der Ansprüche 1 bis 5, dadurch gekennzeichnet, daß die Einrichtungen (19, 24, 29) für die Verschiebeverlagerung des Wagens (18) der Schleifvorrichtung (23), der Vorrichtung zum Überprüfen durch Ultraschall (22) und des mechanischen Positionsdetektors (34) pneumatische Stellglieder sind.

7. Vorrichtung nach einem der vorangehenden Ansprüche, dadurch gekennzeichnet, daß sie elektropneumatische (55) und elektronische (56) Steuereinrichtungen aufweist.

8. Vorrichtung nach einem der Ansprüche 1 bis 7, dadurch gekennzeichnet, daß die Schiene (10) an seinem oberen Teil einen V-Arretiereinschnitt (10') für das Rad (52) in der Meß- und Überprüfposition aufweist.

## Claims

1. A device for checking the rim of a railway wheel (52), comprising :
- a frame (1) comprising a horizontal part in the form of a quadrilateral and at least one vertical part (6, 7) disposed parallel to one of the edges of the horizontal part,
- a rail (10) for supporting the wheel (52), fixed to the horizontal part of the frame (1) in a direction parallel to the direction of the vertical part (6, 7) of the frame (1),
- side bars (8, 9) for guiding the wheel (52), fixed to the vertical part (6, 7) of the frame (1) in a direction parallel to the direction of the rail (10),
- a side bar (17) parallel to the side bars (6, 9) for guiding the wheel mounted for movement perpendicularly to the guide side bars (8, 9) and parallel to the horizontal part of the frame (1),
- means (15, 16) for the displacement of the movable side bar (17), intended to apply it against the wheel (52),
- slideways (11, 12) fixed to the horizontal part of the frame (1) in a direction parallel to the rail (10),
- a carriage (18) movably mounted for translation on the slideways (11, 12),
- a means (19) for displacing the carriage (18),
- a grinding device (23) carried by the carriage (18) and mounted for movement on the carriage (18) in a direction perpendicular to the slideways (11, 12),
- a means (24) for displacing the grinding device (23),
characterized in that it comprises, moreover:
- an ultrasonic test device (22) mounted for translational movement on the carriage (18) in a direction perpendicular to the slideways (11, 12),
- a means (29) for the displacement of the ultrasonic test device (22) between an operative position in contact with the rim of the wheel (52) and a retracted position,
- a position detector (34) of a mechanical type mounted on the carriage (18) for movement in a direction perpendicular to the slideways (11, 12), and means (29) for displacing the detector (34) between a retracted position and a position of bearing against the rim of the wheel (52).

2. A device according to claim 1, characterized in that the ultrasonic test device (22) comprises a transmitter-receiver head (30) of ultrasonic shearing waves mounted for rotation round a horizontal axis parallel to the axis of displacement of the ultrasonic test device (22), a means (31) for displacing the transmitter-receiver head (30) in rotation and a means (32) for dispensing a coupling fluid.

3. A device according to claim 1 or 2, characterized in that it comprises moreover :
- a means (21) carried by the carriage (18), for hardness measurements by ball testing,
- a device (37, 43) for applying a predetermined force against the device (21) for hardness measurements by ball testing.

4. A device according to claim 3, characterized in that the device (21 for hardness measurements by ball testing comprises a ball-testing head (25) mounted at one end of a rod (26) sliding in a sleeve (28), the said rod (26) comprising at one end on the opposite side to the ball-testing head (25), a cap and a sensor of the linear displacement of the ball-testing head (25).

5. A device according to claim 4, characterized in that the device for applying a predetermined force against the device (21) for hardness measurement by ball testing comprises :
- a lever (37) articulated on the frame (1),
- a sorew jack (39) provided with a motor (40) carried by the lever (37) and comprising a part (41) for bearing on the cap (37) of the device (21) for hardness measurements by ball testing,
- a counterweight (43) comprising a part (48) for bearing on the lever (37),
- a jack (45) for raising the counterweight (43),
- a jack (49) for releasing the counterweight (43),
- a fixed support (44) for the raising and releasing jacks (45, 49) and for the counterweight (43).

6. A device according to any one of claims 1 to 5, oharacterized in that the means (18, 24, 29) for the translational displacement of the carriage (18), of the grinding device (23), of the ultrasonic test device (22) and of the mechanical position detector (34) are pneumatic jacks.

7. A device according to any one of the preceding claims, characterized in that it comprises electropneumatic actuating means (55) and electronic actuating means (56).

8. A device according to any one of claims 1 to 8, characterized in that the rail (10) comprises at its upper portion a V-shaped notch (10') for arresting the wheel (52) in the measuring and testing position.
